# EUROPEAN PATENT SPECIFICATION

(11) **EP 3 618 063 B1**
(45) Date of publication and mention of the grant of the patent: **14.09.2022**
(21) Application number: 19191406.8
(22) Date of filing: 13.08.2019
(51) Int. Cl.: G10L 15/22, G06F 3/16, G06V 40/16, G06V 40/18, H04M 3/493, G10L 25/63, G10L 25/66, G10L 25/51, G10L 17/26, G10L 15/06, G06K 9/00, G10L 17/00

(54) **VOICE INTERACTION SYSTEM, VOICE INTERACTION METHOD AND CORRESPONDING PROGRAM**
SPRACHINTERAKTIONSSYSTEM, SPRACHINTERAKTIONSVERFAHREN UND ENTSPRECHENDES PROGRAMM
SYSTÈME D'INTERACTION VOCALE, PROCÉDÉ D'INTERACTION VOCALE ET PROGRAMME CORRESPONDANT

(30) Priority: 31.08.2018 JP 2018162774
(43) Date of publication of application: 04.03.2020
(73) Proprietor: Kyoto University, Kyoto-shi, Kyoto 606-8501 (JP); TOYOTA JIDOSHA KABUSHIKI KAISHA, Toyota-shi Aichi-ken, 471-8571 (JP)
(72) Inventor: KAWAHARA, Tatsuya, Kyoto-Shi, Kyoto 606-8501 (JP); HORI, Tatsuro, Aichi-ken, 471-8571 (JP); WATANABE, Narimasa, Aichi-ken, 471-8571 (JP)
(74) Representative: D Young & Co LLP

(56) References cited:
- US-A1- 2002 198 707
- US-A1- 2005 182 618
- US-A1- 2007 073 539

## Description

### BACKGROUND

The present disclosure relates to a voice interaction system, a voice interaction method, a program, a learning model generation apparatus, and a learning model generation method, and in particular, to a voice interaction system, a voice interaction method, a program, a learning model generation apparatus, and a learning model generation method for having a conversation with a user by using a voice.

A technique for enabling a user to enjoy a daily conversation with a voice interaction robot (voice interaction system) is becoming widespread. A voice interaction robot according to this technique analyzes phonological information of a voice uttered by a user and makes a response according to a result of the analysis. Here, the voice interaction robot determines a response using a learning model.

Regarding the above technique, Japanese Unexamined Patent Application Publication No. 2005-352154 discloses an emotional state reaction operation apparatus which evaluates an emotional state of a user from a voice uttered by the user and executes an appropriate corresponding operation. The emotional state reaction operation apparatus according to Japanese Unexamined Patent Application Publication No. 2005-352154 includes phoneme feature quantity extraction means for extracting a feature quantity related to a phoneme spectrum of voice information, state determination means for inputting the phoneme feature quantity and determining an emotional state of the voice information based on a state determination table prepared in advance, and corresponding action selection means for inputting the emotional state and determining a corresponding action process based on a corresponding action selection table prepared in advance. The emotional state reaction motion apparatus according to Japanese Unexamined Patent Application Publication No. 2005-352154 further includes an emotional state learning table and emotional state learning means. The emotional state learning means acquires a relation between the phoneme feature quantity and the emotional state using a predetermined machine learning model based on the emotional state learning table and stores a result of the learning in the state determination table. The state determination means determines an emotional state according to the machine learning model based on the state determination table.
US 2005/182618 A1 discloses systems and methods for determining and using interaction models.
US 2002/198707 A1 discloses a psycho-physical state sensitive voice dialogue system.
US 2007/073539 A1 discloses a speech recognition method and system.

### SUMMARY

Particular aspects of the invention are set out in the appended claims. The machine learning model may not be appropriate depending on a state of a user (a difference in the user, an emotion of the user, etc.). In this case, for example, a response error such as overlapping between user speech and apparatus speech, or a long silence in which a period between user speech and apparatus speech is long may occur. To address this issue, the technique according to Japanese Unexamined Patent Application Publication No. 2005-352154 determines the corresponding action process using one machine learning model. For this reason, with the technique according to Japanese Unexamined Patent Application Publication No. 2005-352154, it is difficult to appropriately handle a situation to effectively prevent a response error caused by an inappropriate learning model from occurring.

The present disclosure relates to a voice interaction system, a voice interaction method, a program, a learning model generation apparatus, and a learning model generation method capable of appropriately handling a situation so as to effectively prevent a response error from occurring.

A voice interaction system according to the present disclosure is a voice interaction system that has a conversation with a user by using a voice, including: a speech acquisition unit configured to acquire user speech given by the user; a feature extraction unit configured to extract at least a feature of the acquired user speech; a response determination unit configured to determine a response in accordance with the extracted feature using any one of a plurality of learning models generated in advance by machine learning; a response execution unit configured to perform control in order to execute the determined response; a user state detection unit configured to detect a user state, which is a state of the user; and a learning model selection unit configured to select the learning model from the plurality of learning models in accordance with the detected user state, in which the response determination unit determines the response using the learning model selected by the learning model selection unit.

Further, a voice interaction method according to the present disclosure is a voice interaction method performed by a voice interaction system that has a conversation with a user by using a voice, the voice interaction method including: acquiring user speech given by the user; extracting at least a feature of the acquired user speech; determining a response in accordance with the extracted feature using any one of a plurality of learning models generated in advance by machine learning; performing control in order to execute the determined response; detecting a user state, which is a state of the user; and selecting the learning model from the plurality of learning models in accordance with the detected user state, in which the response is determined using the selected learning model.

Further, a program according to the present disclosure is a program for executing a voice interaction method performed by a voice interaction system that has a conversation with a user by using a voice, the program causing a computer to execute the steps of: acquiring user speech given by the user; extracting at least a feature of the acquired user speech; determining a response in accordance with the extracted feature using any one of a plurality of learning models generated in advance by machine learning; performing control in order to execute the determined response; detecting a user state, which is a state of the user; selecting the learning model from the plurality of learning models in accordance with the detected user state; and determining the response using the selected learning model.

The cause for generating a response error is often an inappropriate learning model. The above-described configuration of the present disclosure makes it possible to switch the learning model to an appropriate one in accordance with the user state when the learning model is not appropriate. Therefore, the present disclosure can appropriately handle a situation so as to effectively prevent a response error from occurring.

Further, the user state detection unit detects a degree of activeness of the user in the conversation as the user state, and the learning model selection unit selects the learning model that corresponds to the degree of the activeness of the user.

The above-described configuration of the present disclosure makes it possible to have a conversation using the learning model that is suitable for the degree of the activeness of the user in the conversation, thereby executing a response in accordance with the activeness of the user who has a conversation.

Further, the user state detection unit detects the percentage of the time during which the user has made a speech with respect to the sum of the time during which the voice interaction system has output a voice as a response and the time during which the user has made a speech in the predetermined period, and the learning model selection unit selects the learning model that corresponds to the amount of speech given by the user or the percentage of the time during which the user has made a speech.

The above-described configuration of the present disclosure makes it possible to determine the degree of the activeness of the user more accurately.

Further, preferably, the user state detection unit detects identification information on the user as the user state, and the learning model selection unit selects the learning model that corresponds to the identification information on the user.

The above-described configuration of the present disclosure makes it possible to have a conversation using the learning model that is suitable for the user, thereby executing a response in accordance with the user who has a conversation.

Further, in an example not forming part of the claimed invention, the user state detection unit detects emotion of the user as the user state, and the learning model selection unit selects the learning model that corresponds to the emotion of the user.

The above-described configuration of the present disclosure makes it possible to have a conversation using the learning model that is suitable for the degree of user's emotion in the conversation, thereby making a response in accordance with the emotion of the user who has a conversation.

Further, in an example not forming part of the claimed invention, the user state detection unit detects a health condition of the user as the user state, and the learning model selection unit selects the learning model that corresponds to the health condition of the user.

The above-described configuration of the present disclosure makes it possible to have a conversation using a learning model that is suitable for the degree of the user's health condition, thereby executing a response in accordance with the health condition of the user who has a conversation.

Further, in an example not forming part of the claimed invention, the user state detection unit detects a degree of an awakening state of the user as the user state, and the learning model selection unit selects the learning model that corresponds to the degree of the awakening state of the user.

The above-described configuration of the present disclosure makes it possible to have a conversation using the learning model adapted for the degree of the user's awakening state, thereby making a response in accordance with the awakening state of the user who has a conversation.

Further, a learning model generation apparatus according to the present disclosure is a learning model generation apparatus configured to generate a learning model used in a voice interaction system that has a conversation with a user by using a voice, the apparatus including: a speech acquisition unit configured to acquire user speech, which is speech given by one or more desired user, by having a conversation with the desired user; a feature extraction unit configured to extract a feature vector indicating at least a feature of the acquired user speech; a sample data generation unit configured to generate sample data in which a correct label indicating a response to the user speech and the feature vector are associated with each other; a user state acquisition unit configured to acquire a user state, which is a state of the desired user when the user has made a speech, to associate the acquired user state with the sample data that corresponds to the user speech; a sample data classification unit configured to classify the sample data for each of the user states; and a learning model generation unit configured to generate a plurality of learning models by machine learning for each of the pieces of classified sample data.

Further, a learning model generation method according to the present disclosure is a learning model generation method for generating a learning model used in a voice interaction system that has a conversation with a user by using a voice, the method including: acquiring user speech, which is speech given by one or more desired user, by having a conversation with the desired user; extracting a feature vector indicating at least a feature of the acquired user speech; generating sample data in which a correct label indicating a response to the user speech and the feature vector are associated with each other; acquiring a user state, which is a state of the desired user when the user has made a speech, to associate the acquired user state with the sample data that corresponds to the user speech; classifying the sample data for each of the user states; and generating a plurality of learning models by machine learning for each of the pieces of classified sample data.

The present disclosure is able to classify the sample data for each user state and generate a plurality of learning models by machine learning, thereby generating a plurality of learning models that correspond to the user state. Therefore, the voice interaction system is able to select the learning model in accordance with the user state.

According to the present disclosure, it is possible to provide a voice interaction system, a voice interaction method, a program, a learning model generation apparatus, and a learning model generation method capable of appropriately handling a situation so as to effectively prevent a response error from occurring.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a diagram showing a hardware configuration of a voice interaction system according to a first embodiment;
Fig. 2 is a block diagram showing a configuration of the voice interaction system according to the first embodiment;
Fig. 3 is a diagram illustrating an example of a feature vector generated by a feature extraction unit according to the first embodiment;
Fig. 4 is a diagram for describing an outline of a method of generating a learning model according to the first embodiment;
Fig. 5 is a diagram for describing an outline of the method of generating the learning model according to the first embodiment;
Fig. 6 is a diagram for describing an outline of the method of generating the learning model according to the first embodiment;
Fig. 7 is a flowchart showing a voice interaction method performed by the voice interaction system according to the first embodiment;
Fig. 8 is a flowchart showing a voice interaction method performed by the voice interaction system according to the first embodiment;
Fig. 9 is a diagram showing processing in a case in which a user state is identification information on the user not set out in the appended claims;
Fig. 10 is a diagram showing processing in a case in which the user state is a degree of user's activeness in a conversation;
Fig. 11 is a diagram illustrating a table for determining the degree of activeness;
Fig. 12 is a diagram showing processing in a case in which the user state is user's emotion not set out in the appended claims;
Fig. 13 is a diagram showing processing in a case in which the user state is user's health condition not set out in the appended claims;
Fig. 14 is a diagram showing processing in a case in which the user state is a degree of the user's awakening state not set out in the appended claims;
Fig. 15 is a block diagram showing a configuration of a voice interaction system according to a second embodiment not set out in the appended claims;
Fig. 16 is a diagram showing a configuration of a learning model generation apparatus according to the second embodiment; and
Fig. 17 is a flowchart showing a learning model generation method executed by the learning model generation apparatus according to the second embodiment.

### DESCRIPTION OF EMBODIMENTS

### (First Embodiment)

Hereinafter, embodiments according to the present disclosure are explained with reference to the drawings. Note that the same symbols are assigned to the same components throughout the drawings, and repeated explanations are omitted as required.

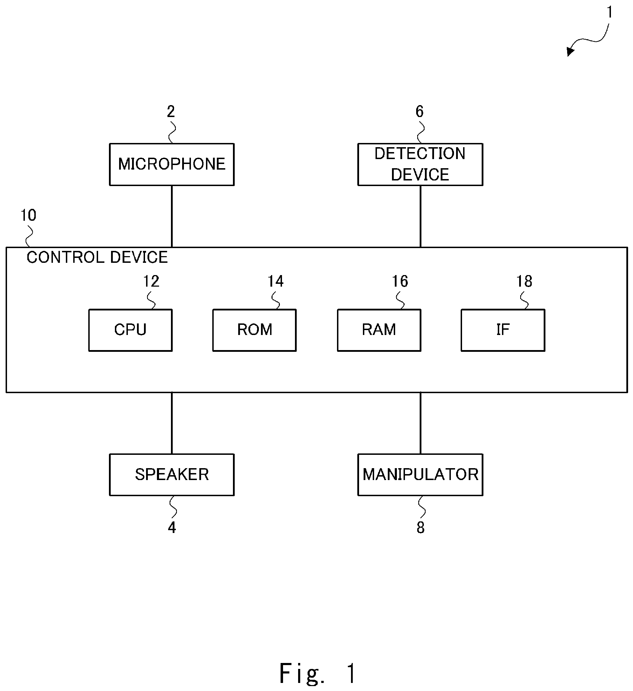

Fig. 1 is a diagram showing a hardware configuration of a voice interaction system 1 according to a first embodiment. The voice interaction system 1 performs a conversation with a user by using a voice. Specifically, the voice interaction system 1 performs a conversation with a user by executing a response such as a voice for the user according to speech given by the user (i.e., according to user speech). The voice interaction system 1 can be installed in, for example, a robot such as a livelihood support robot and a compact robot, a cloud system, a smart phone, and so on. An example in which the voice interaction system 1 is installed in a robot is given in the following descriptions.

The voice interaction system 1 includes a microphone 2 that collects surrounding sounds, a speaker 4 that produces a voice, a detection device 6 used to detect a user's state, a manipulator 8 that operates a neck and the like of the robot, and a control device 10. The control device 10 has, for example, a function as a computer. The control device 10 is connected to the microphone 2, the speaker 4, the detection device 6, and the manipulator 8 wirelessly or through a wire. The detection device 6 includes, for example, at least one of a camera and a biometric sensor. The biometric sensor is, for example, a sphygmomanometer, a thermometer, or a pulsimeter.

The control device 10 includes, as main hardware components, a CPU (Central Processing Unit) 12, a ROM (Read Only Memory) 14, a RAM (Random Access Memory) 16, and an interface (IF) unit 18. The CPU 12, the ROM 14, the RAM 16, and the interface unit 18 are connected to each other through a data bus or the like.

The CPU 12 has a function as an arithmetic unit that performs a control process, an arithmetic process, and the like. The ROM 14 has a function of storing a control program, an arithmetic program, and the like executed by the CPU 12. The RAM 16 has a function of temporarily storing processing data and the like. The interface unit 18 inputs and outputs signals to and from the outside wirelessly or through a wire. Further, the interface unit 18 accepts an operation of inputting data by the user, and displays information for the user.

The control device 10 analyzes user speech collected by the microphone 2, determines a response to the user according to the user speech, and executes it. Here, in this embodiment, the "response" includes "silent", "nod", and "speak". The "silent" is an action in which the voice interaction system 1 does nothing.
The "nod" is an action of vertically swinging the neck part of the robot. The "speak" is an action in which the voice interaction system 1 outputs a voice.
When the determined response is "nod", the control device 10 controls the manipulator 8 to operate the neck part of the robot. When the determined response is "speak", the control device 10 outputs a voice (system speech) corresponding to the generated response through the speaker 4.

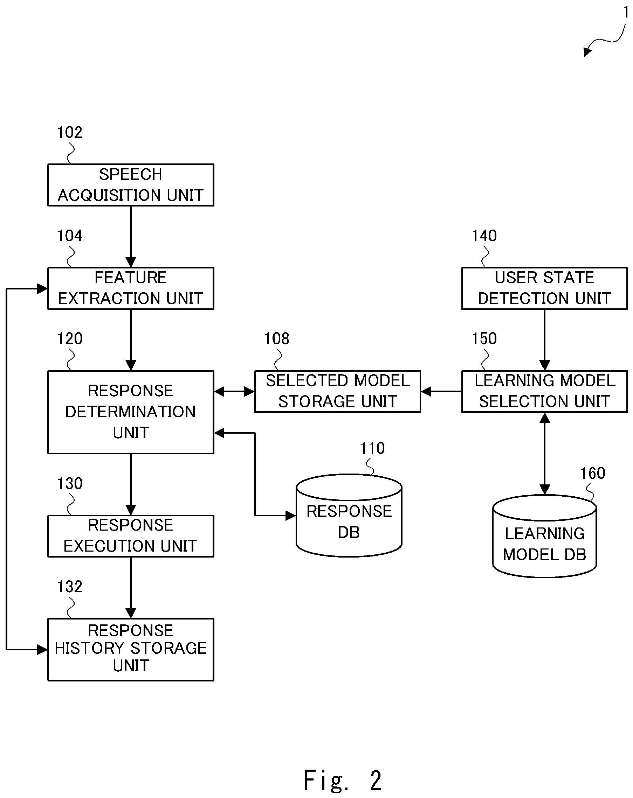

Fig. 2 is a block diagram showing a configuration of the voice interaction system 1 according to the first embodiment. The voice interaction system 1 according to the first embodiment includes a speech acquisition unit 102, a feature extraction unit 104, a selected model storage unit 108, a response database 110 (response DB), a response determination unit 120, a response execution unit 130, and a response history storage unit 132. The voice interaction system 1 according to the first embodiment further includes a user state detection unit 140, a learning model selection unit 150, and a learning model database 160 (learning model DB).

Each of the components shown in Fig. 2 can be implemented by at least one of the microphone 2, the speaker 4, the manipulator 8, and the control device 10. Further, at least one of the components can be implemented, for example, by having the CPU 12 execute a program stored in the ROM 14. Further, a necessary program may be stored in an arbitrary nonvolatile recording medium and may be installed as required. Note that the implementation of each component is not limited to software implementation. That is, each component may be implemented by hardware such as some kind of a circuit element. Furthermore, it is not necessary for all of the components shown in Fig. 2 to be included in one device, and instead one or more of the components shown in Fig. 2 may be included in a device that is physically separate from the other components. For example, the learning model database 160 may be included in a server, and components other than the learning model database 160 may be included in a voice interaction robot etc. that can communicate with the server. This also applies to other embodiments, which will be described later.

The speech acquisition unit 102 may include the microphone 2. The speech acquisition unit 102 acquires user speech (and speech of the voice interaction system 1). Specifically, the speech acquisition unit 102 collects user speech (and speech of the voice interaction system 1) and converts it into a digital signal. Then, the speech acquisition unit 102 outputs voice data of the user speech (user voice data) to the feature extraction unit 104.

The feature extraction unit 104 extracts at least features of the user speech. Specifically, the feature extraction unit 104 analyzes, for the user speech, non-linguistic information, which is different from linguistic information indicating a specific semantic content of the user speech. Further, the feature extraction unit 104 generates a feature vector, which will be described later, as a non-linguistic information analysis result that is a result of analyzing the non-linguistic information. Then, the feature extraction unit 104 outputs the non-linguistic information analysis result (the feature vector) to the response determination unit 120. The feature extraction unit 104 may extract user's features other than the user speech and generate a feature vector.

Note that the non-linguistic information is information that is different from the linguistic information (the character string) of user speech to be processed and includes at least one of prosodic information on the user speech and response history information. The prosodic information is information indicating features of a voice waveform of user speech such as a fundamental frequency, a sound pressure, a variation in frequency or the like, a band of variations, a maximum amplitude, an average amplitude, and so on. Further, the response history information is information indicating a past history of responses determined (generated) by the response determination unit 120 and executed by the response execution unit 130. The response history storage unit 132 stores (updates) this response history information when a response is executed by the response execution unit 130.

Specifically, the feature extraction unit 104 analyzes prosodic information based on the voice waveform by performing a voice analysis or the like for the user voice data acquired by the speech acquisition unit 102. Then, the feature extraction unit 104 calculates a value indicating a feature quantity indicating the prosodic information. Note that the feature extraction unit 104 may calculate, for the user voice data, a fundamental frequency or the like for each of frames that are obtained by dividing the user voice data, for example, at the interval of 32 msec. Further, the feature extraction unit 104 extracts response history information from the response history storage unit 132 and calculates a feature quantity indicating a feature of the response history.

Note that since the syntactic analysis using the linguistic information of the user speech uses pattern recognition or the like, it often requires a very long time to do this analysis. In contrast to this, the amount of data used for the analysis of the non-linguistic information (i.e., the analysis of the prosodic information and the analysis of the response history information) is smaller than that for the syntactic analysis and its calculation technique is simpler than that for the syntactic analysis. Therefore, the time required for the analysis of the non-linguistic information may be much shorter than the time required for the syntactic analysis.

The selected model storage unit 108 stores a learning model selected by the learning model selection unit 150, which will be described later. Here, in this embodiment, the learning model selection unit 150 selects an appropriate learning model from a plurality of learning models stored in the learning model database 160 by a method described later. When the learning model selection unit 150 has not selected a learning model, such as before a voice interaction starts, the selected model storage unit 108 may store one specified learning model.

The response database 110 stores data necessary for the voice interaction system 1 to make a response. For example, the response database 110 stores in advance a plurality of system voice data pieces indicating system speech when the response is "speak".

The response determination unit 120 determines which response is to be executed according to the non-linguistic information analysis result (the feature vector). Here, in this embodiment, the response determination unit 120 determines a response according to the extracted feature (the feature vector) using one of the plurality of learning models generated by machine learning in advance such as supervised learning. Details thereof will be described later.

In this embodiment, the response determination unit 120 determines one of "silent", "nod", and "speak" as a response. The response determination unit 120 outputs data (response data) indicating the determined response to the response execution unit 130. When the response determination unit 120 determines to "speak" as a response, it may sequentially or randomly select the system speech (the system voice data) from the plurality of system speech stored in the response database 110. The response determination unit 120 outputs the selected system voice data to the response execution unit 130.

The response execution unit 130 performs control for executing the response determined by the response determination unit 120. Specifically, when the response data output from the response determination unit 120 indicates "silent (silent response)", the response execution unit 130 controls the speaker 4 and the manipulator 8 so that they do not operate. When the response data output from the response determination unit 120 indicates "nod (nod response)", the response execution unit 130 controls the manipulator 8 to operate the neck part of the robot. When the response data output from the response determination unit 120 indicates "speak (speech response)", the response execution unit 130 controls the speaker 4 to output a voice indicating the system voice data selected by the response determination unit 120.

The response history storage unit 132 stores data for identifying the response executed by the response execution unit 130 as response history information. Further, when the response history storage unit 132 includes the time related to a conversation as the response history information, the response history storage unit 132 may measure a period of time during which the conversation takes place and store the measured time as the response history information.

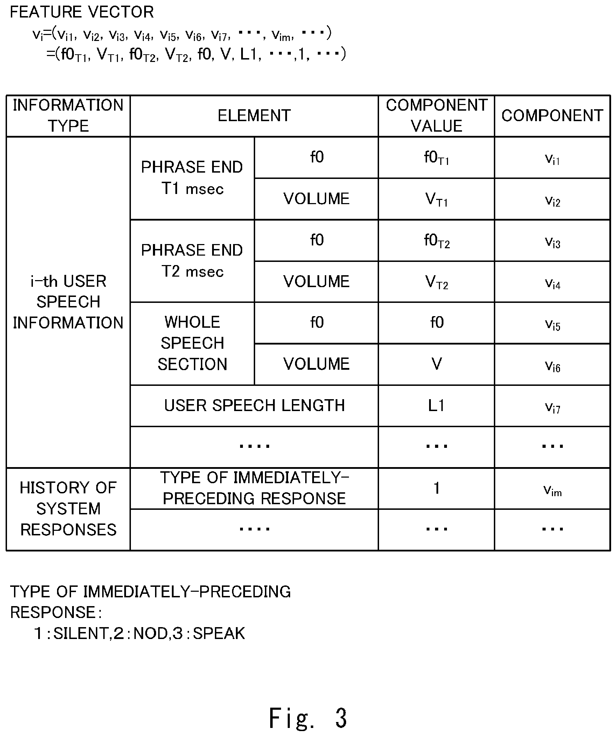

Fig. 3 is a diagram illustrating an example of a feature vector generated by the feature extraction unit 104 according to the first embodiment. Note that the feature vector shown in Fig. 3 is merely an example. That is, other various feature vectors can be used as the feature vector. Letting vᵢ represent a feature vector for i-th user speech, n components of the feature vector are expressed as "vᵢ = (vᵢ₁, Vi2, ... , Vᵢₘ₋₁), Vᵢₘ, Vᵢ₍ₘ₊₁₎, ... , vᵢₙ)". Note that each of i, n and m is an integer (n>m). Further, vᵢ₁ to vᵢ₍ₘ₋₁₎ correspond to a result of an analysis of prosodic information related to information on the i-th user speech. Further, vᵢₘ to vᵢₙ correspond to a result of an analysis of response history information. Note that vᵢₘ to vᵢₙ may be information itself stored in the response history storage unit 132. That is, for the response history information, the feature extraction unit 104 may just extract response history from the response history storage unit 132 and may not perform any special analysis.

In the example shown in Fig. 3, vᵢ₁ represents a parameter for a fundamental frequency f0 (f0_{T1}) in T1 msec at the end of a phrase (hereinafter referred to as the "phrase end") of the i-th user speech (a period between T1 msec (T milliseconds) before the end of the user speech and the end of the user speech). Further, vᵢ₇ represents a length L1 [sec] of the i-th user speech (a user speech length). Note that the fundamental frequency f0 may be calculated for each frame by using logic of SWIPE (Saw-tooth Waveform Inspired Pitch Estimation) of SPTK (Speech Signal Processing Toolkit).

Further, vᵢₘ represents a type of an immediately-preceding response. The type of the immediately-preceding response is a type of an immediately-preceding response executed by the response execution unit 130 (just before the i-th user speech) (and is one of "silent", "nod", and "speak"). Note that for each of component values (feature quantities) of components that are not numerical values such as Vᵢₘ, a numerical value is assigned for each type. For example, for Vᵢₘ, a component value "1" indicates "silent", a component value "2" indicates "nod", and a component value "3" indicates "speak".

The user state detection unit 140 (Fig. 2) determines the state of the user who has given a speech (user state). Details thereof will be described later. The user state detection unit 140 outputs the detected user state to the learning model selection unit 150. While the user state is, for example, identification information on the user, user's activeness in the conversation, user's emotion, user's health condition, or user's awakening state, it is not limited thereto. While the user's emotion is, for example, user's delight, anger, sorrow, pleasure, or surprise, it is not limited thereto. Further, while the user's health condition is, for example, pulse, body temperature, blood pressure or the like of the user, it is not limited thereto. The user state detection unit 140 detects the aforementioned user state using the image of the user captured by a camera, pulse, body temperature, or blood pressure of the user detected by a biometric sensor, or user's voice collected by the microphone 2.

The learning model selection unit 150 selects a learning model from the plurality of learning models stored in the learning model database 160 according to the user state detected by the user state detection unit 140. Details thereof will be described later. The learning model database 160 stores the plurality of learning models generated in advance by machine learning. A specific example of a method of generating the plurality of learning models will be described later.

The cause for generating a response error is often an inappropriate learning model. For example, an appropriate learning model for a certain user may not be appropriate for another user. Even for the same user, an appropriate learning model may become inappropriate due to changes in the user's emotion etc. The learning model being inappropriate means that the accuracy of the response to the user speech is low. In other words, the leaning model being inappropriate means that the tempo and the rhythm of the conversation are not good. Since the suitable tempo and rhythm of the conversation may vary depending on the user, it is possible that the learning model that is appropriate for one user may not be suitable for another user. Further, even for the same user, the suitable tempo and rhythm of the conversation may vary depending on changes in his/her emotion or the like, and the learning model that was appropriate before may be no longer appropriate. When the accuracy of the response to the learning model is low, the robot executes a "speech response" when a "silent response" should be executed for certain user speech, or the robot executes a "silent response" when a "speech response" should be executed for certain user speech.

On the other hand, in this embodiment, it is possible to switch the learning model to an appropriate one in accordance with the user state. Thus, the voice interaction system 1 according to this embodiment can appropriately handle a situation to effectively prevent a response error from occurring. That is, the voice interaction system 1 according to this embodiment makes it possible to improve the response accuracy.

Next, an outline of a method of generating the learning model will be described.

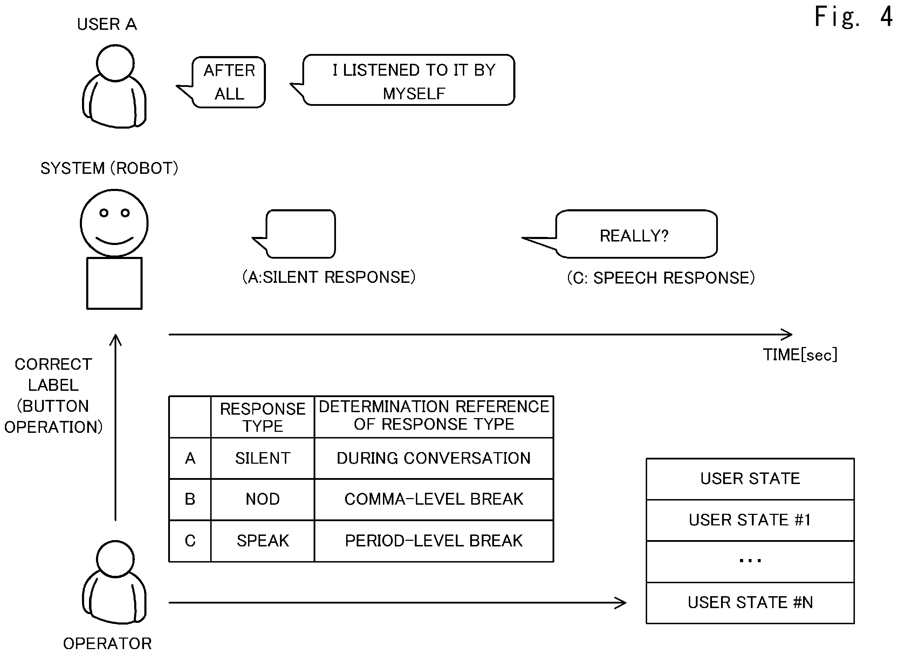

Figs. 4 to 6 are diagrams for describing an outline of the method of generating the learning model according to the first embodiment. First, sample data for generating the learning model is acquired. As shown in Fig. 4, sample data (training data) in which the feature vector and a correct label are associated with each other by a conversation between a user A and the robot, such as the robot (the voice interaction system 1) responding to the user speech, is collected. At this time, an operator operates the robot (the voice interaction system 1) in such a way that the robot executes an appropriate response to speech of the user A.

In the example shown in Fig. 4, a correct label "A" corresponds to the "silent response". A correct label "B" corresponds to a "nod response." A correct label "C" corresponds to a "speech response". The operator operates the robot so that a silent response is executed during the speech of the user A. At this time, the operator does not have to do anything. In addition, the operator operates the robot so that a nod response is executed at a comma-level break in speech of the user A. At this time, the robot nods by the operator's operation. Further, the operator operates the robot so that a speech response is executed at a period-level break of speech of the user A. At this time, the robot speaks by the operator's operation.

In the example of Fig. 4, the operator determines that it is in the middle of the speech of the user A, because there is no break between the speech of the user A "after all" and "I listened to it by myself", and then operates the robot to execute a silent response. When the speech of the user A "I listened to it by myself" ends, it is determined that there is a period-level break, and the operator operates the robot to execute a speech response. At this time, the robot outputs speech "Really?".

Further, the user state of the user A is detected. The user state may be determined by, for example, an operator or may be automatically detected by the aforementioned function such as the user state detection unit 140. Accordingly, one of user states #1 to #N is associated with the sample data. The symbol N, which is an integer equal to or larger than two, indicates the number of user states. This N may correspond to the number of learning models.

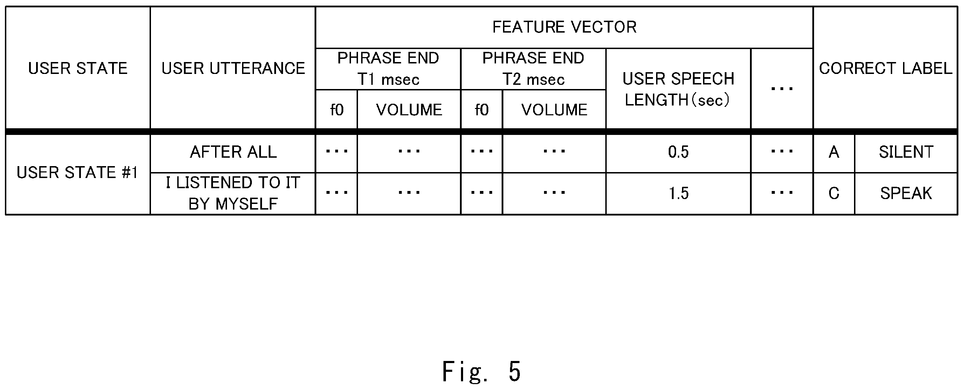

Fig. 5 is a diagram illustrating an example of the sample data which is a pair of the feature vector and the correct label acquired from the example of Fig. 4. Since a length of the user speech "after all" is 0.5 seconds, "0.5" is input to a component of the feature vector (vᵢ₇ in Fig. 3). Further, since the response to the user speech "after all" is the "silent response", the correct label "A" is associated with the feature vector of the user speech "after all".

Moreover, since a length of the user speech "I listened to it by myself" is 1.5 seconds, "1.5" is input to a component of the feature vector (vᵢ₇ in Fig. 3). Furthermore, since the response to the user speech "I listened to it by myself" is the "speech response", the correct label "C" is associated with the feature vector of the user speech "I listened to it by myself". Furthermore, in the series of user speech "After all I listened to it by myself", the user state (e.g., the identification information on the user) is the "user state #1" (e.g., the "user A"). Therefore, the user state #1 is associated with the sample data group that corresponds to the user speech "After all I listened to it by myself".

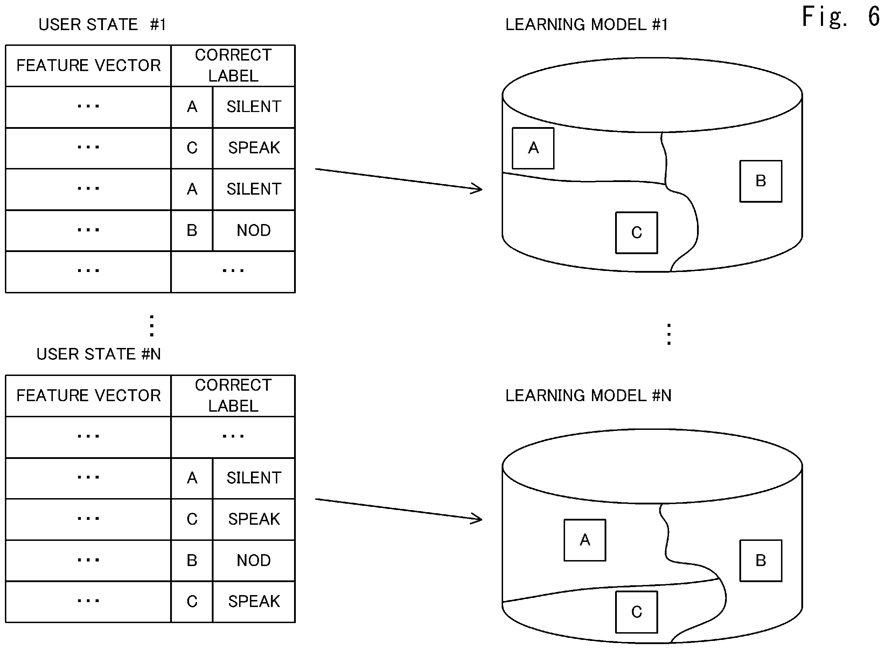

Fig. 6 is a diagram illustrating a mode in which the learning model is generated from the classified sample data group. A sample data group collected in the manner described above is classified into N groups for each of the user states #1 to #N. A learning model #1 is generated from a sample data group of the user state #1 (e.g., a sample data group that corresponds to the user speech of the "user A") by machine learning such as, for example, supervised learning. Likewise, a learning model #N is generated from a sample data group of the user state #N (e.g., a sample data group that corresponds to the user speech of the "user N") by machine learning. Since boundaries of the correct labels "A", "B", and "C" of the learning models #1 to #N differ from one another, even when the same feature vector is input to each of the learning models #1 to #N, the response to be output may be different. The plurality of learning models thus generated are stored in the learning model database 160. The method of the machine learning used to generate the learning model may be, for example, random forest, Support Vector Machine (SVM), or deep learning.

The boundaries of the correct labels "A", "B", and "C" of the learning models are defined depending on the user state. When, for example, the user state is "activeness", as the learning model corresponds to the user state in which the degree of activeness is large, the probability that "speak" is selected may be reduced and the probability that "silent" is selected may increase. That is, the degree of activeness in a conversation being large means that the user tends to speak actively. In this case, the voice interaction system 1 is adjusted to speak less frequently in order to prevent the speech of the voice interaction system 1 from overlapping that of the user. On the other hand, when the degree of activeness in the conversation is small, this means that the user tends not to speak very actively. In this case, the voice interaction system 1 is adjusted to speak more frequently in order to suppress a long silence.

Further, the learning model corresponds to the user state detected by the aforementioned user state detection unit 140. When, for example, the user state detection unit 140 detects "the degree of activeness" as the user state, a plurality of learning models are provided for each degree of activeness. Further, when the user state detection unit 140 detects "the identification information on the user" as the user state, a plurality of learning models are provided for each of the pieces of identification information on the user (the user A, the user B, ···, the user N etc.)

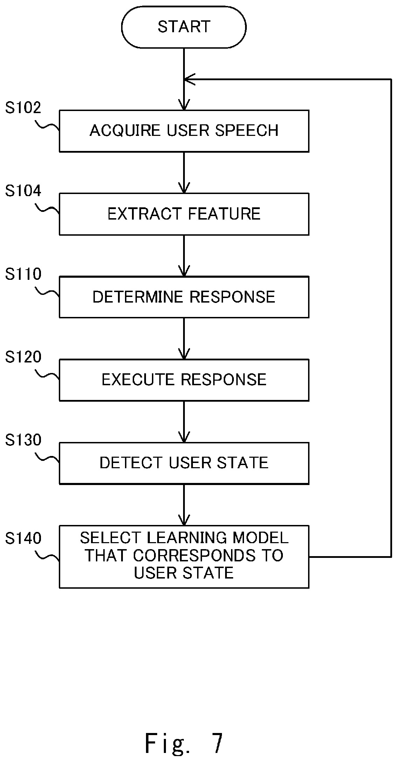

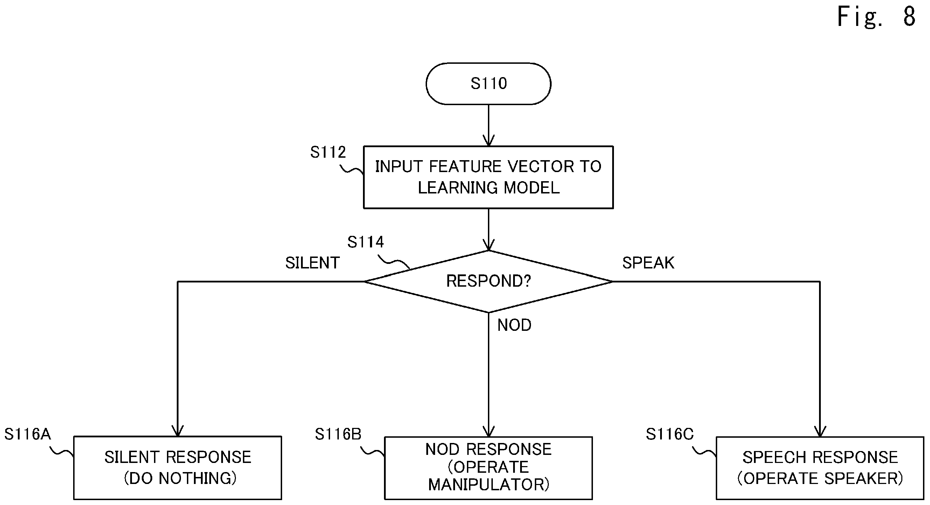

Figs. 7 and 8 are flowcharts showing a voice interaction method performed by the voice interaction system 1 according to the first embodiment. First, the speech acquisition unit 102 acquires user speech as described above (Step S102). As described above, the feature extraction unit 104 analyzes the non-linguistic information (the prosodic information and response history information) about the acquired user speech and extracts a feature (a feature vector) of the user speech (Step S104).

Next, the response determination unit 120 determines a response to the user speech according to the extracted feature vector using the current learning model (the learning model stored in the selected model storage unit 108) (Step S110). The response execution unit 130 executes the response determined in S110 as described above (Step S120).

Fig. 8 is a flowchart showing the process of S110. The response determination unit 120 inputs the extracted feature vector to the learning model (Step S112). The response determination unit 120 determines the output of the learning model (Step SI14).

When the output is the "silent response" ("silent" in SI14), the response determination unit 120 determines to execute the silent response (Step S116A). That is, the response determination unit 120 determines not to do anything for the user speech corresponding to this feature vector. When the output is the "nod response" ("nod" in S 114), the response determination unit 120 determines to execute the nod response (Step S116B). That is, the response determination unit 120 determines to operate the manipulator 8 in such a way that the neck part of the robot is swung vertically for the user speech corresponding to this feature vector. When the output is the "speech response" ("speak" in S114), the response determination unit 120 determines to execute speech response (Step S116 C).
That is, the response determination unit 120 determines to operate the speaker 4 to output the system speech for the user speech corresponding to this feature vector.

Next, as described above, the user state detection unit 140 detects the user state (Step S130). The learning model selection unit 150 selects the learning model that corresponds to the user state detected by the processing of S130 (Step S140). To be more specific, when the current learning model is different from the one that corresponds to the detected user state, the learning model selection unit 150 switches the current learning model to the learning model that corresponds to the detected user state. On the other hand, when the current learning model is the one that corresponds to the detected user state, the learning model selection unit 150 does not change the learning model. As described above, the learning model selection unit 150 according to the first embodiment is configured to select a new learning model in accordance with the user state, whereby it becomes possible to select the learning model that can further improve the accuracy of a response.

Hereinafter, specific examples of the user state will be explained. The first example is an example in a case in which the user state is the identification information on the user. The second example is an example in a case in which the user state is the degree of user's activeness in a conversation. The third example is an example in a case in which the user state is a degree of the user's emotion. The fourth example is an example in a case in which the user state is a degree of the user's health condition. The fifth example is an example in which the user state is a degree of the user's awakening state.

### (First example of user state not set out in the appended claims)

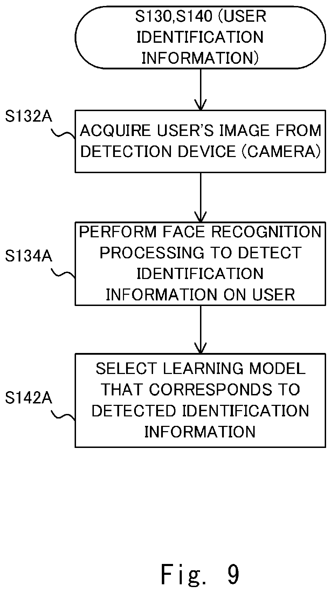

Fig. 9 is a diagram showing processing in a case in which the user state is the identification information on the user. Fig. 9 shows specific processing of S130 and S140 (Fig. 7) in a case in which the user state is the identification information on the user. The user state detection unit 140 acquires a user's image from the detection device 6, which is a camera (Step S132A). The "image" may also indicate image data indicating the image, which is a target of information processing (the same is applicable to the following description).

The user state detection unit 140 performs face recognition processing on the image to detect identification information on the user (Step S134A). To be more specific, the user state detection unit 140 determines, for example, the face area of the user from the image, performs detection of face feature points, and determines feature point positions of the face such as the eyes, the nose, the ends of the mouth and the like. Then the user state detection unit 140 normalizes the position and the size of the face area using the feature point position, and then performs face collation processing with the image of the person that has been registered in advance. Accordingly, the user state detection unit 140 acquires identification information on the collated person.

Next, the learning model selection unit 150 selects the learning model that corresponds to the detected identification information (Step S142A). It is assumed that a plurality of learning models are stored in the learning model database 160 in advance for each of the pieces of identification information on the user. When, for example, the identification information on the "user A" has been detected by the user state detection unit 140, the learning model selection unit 150 selects the learning model that corresponds to the "user A".

As described above, the voice interaction system 1 according to the first example has a conversation using the learning model that is suitable for the user, whereby this voice interaction system 1 is able to execute a response in accordance with the user who has a conversation with this voice interaction system 1. Therefore, the voice interaction system 1 according to the first example is capable of appropriately handling a situation so as to effectively prevent a response error from occurring. Further, a response error occurring means that the tempo or the rhythm of the current conversation is not suitable for the user. The voice interaction system 1 according to the first example selects the learning model that corresponds to the user, whereby it becomes possible to make the tempo or the rhythm of the conversation suitable for this user.

Further, in the first example, when the learning model is generated, the identification information on the user is associated as the user state. In other words, a plurality of learning models are generated for each of the pieces of identification information on the user. When the learning model is generated, the operator inputs, for example, the identification information on the user, whereby the sample data and the identification information on the user are associated with each other. Accordingly, the sample data is classified for each of the pieces of identification information on the user, and a plurality of pieces of learning data are generated by machine learning using the sample data that has been classified. Accordingly, for example, the learning model that corresponds to the user A, the learning model that corresponds to the user B, and the learning model that corresponds to the user C are generated.

While the user is identified by face recognition processing using images in the aforementioned examples, the method of identifying the user is not limited to this method. The user who made a speech may be identified by performing speaker recognition processing (voice recognition processing) on the user speech. Further, the user may be identified by inputting the identification information (ID) on the user.

### (Second example of user state)

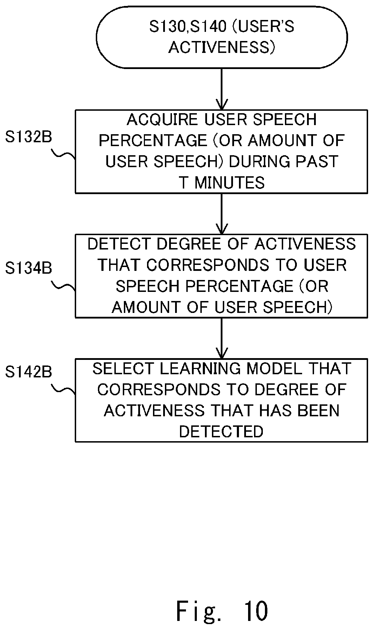

Fig. 10 is a diagram showing processing in a case in which the user state is the degree of user's activeness in the conversation. Fig. 10 shows specific processing of S130 and S140 (Fig. 7) in a case in which the user state is the degree of the user's activeness. The user state detection unit 140 acquires a user speech percentage Rs during the past T minutes (Step S132B). The symbol T denotes a predetermined period. While the time T is, for example, 1 [minute], it is not limited thereto. "The past T minutes" means a period from the time going back to T minutes from the current time to the current time. The user speech percentage Rs is the percentage of the time tu during which the user has made a speech with respect to a sum tu+tr [minutes] of the time tr [minutes] during which the voice interaction system 1 has output a voice as a response and the time tu [minutes] during which the user has made a speech in the past T minutes. That is, Rs[%]=100^{∗}tu/(tu+tr).

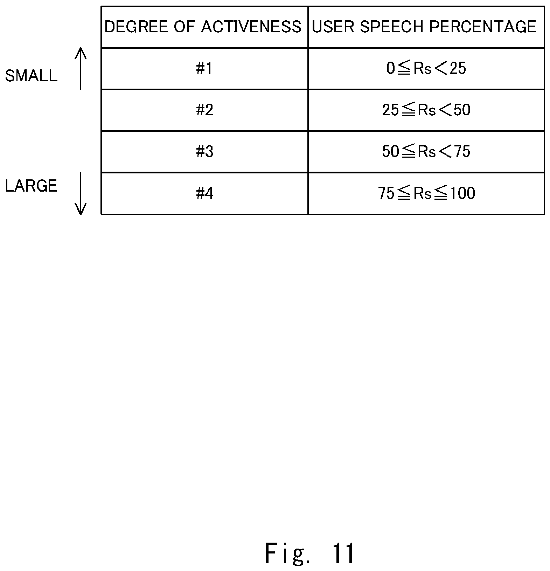

The user state detection unit 140 detects the degree of activeness that corresponds to the user speech percentage Rs (Step S134B). To be more specific, the user state detection unit 140 stores a table illustrated in Fig. 11 in advance. The user state detection unit 140 determines which stage of activeness the user speech percentage Rs corresponds to using this table.

Fig. 11 is a diagram illustrating a table for determining the degree of activeness. In the table illustrated in Fig. 11, the degree of activeness and the user speech percentage Rs are associated with each other. In the example shown in Fig. 11, the degree of activeness is defined by four stages from #1 to #4. The degree of activeness increases from the degree #1 to the degree #4. The user state detection unit 140 determines which one of the degrees #1-#4 the acquired user speech percentage Rs corresponds to. When, for example, Rs is 20[%], the user state detection unit 140 determines that the degree of activeness is #1. Further, when Rs is 80[%], the user state detection unit 140 determines that the degree of activeness is #4.

Next, the learning model selection unit 150 selects the learning model that corresponds to the degree of activeness that has been detected (Step S142B). It is assumed that the plurality of learning models are stored in the learning model database 160 in advance for each degree of the user's activeness. When, for example, "the degree of activeness #1" has been detected by the user state detection unit 140, the learning model selection unit 150 selects the learning model that corresponds to "the degree of activeness #1". Further, when "the degree of activeness #4" has been detected by the user state detection unit 140, the learning model selection unit 150 selects the learning model that corresponds to "the degree of activeness #4".

While the degree of the user's activeness is determined in accordance with the user speech percentage in the aforementioned description, the degree of the user's activeness may be determined in accordance with the amount of speech given by the user. To be more specific, the user state detection unit 140 acquires the amount of user speech [minutes] in the past T minutes (S132B). The user state detection unit 140 detects the degree of activeness that corresponds to the amount of user speech (S134B). In this case, in a way similar to that in the table illustrated in Fig. 11, the user state detection unit 140 may store a table in which the amount of user speech and the degree (stage) of activeness are associated with each other. The user state detection unit 140 may determine which stage of activeness the amount of user speech corresponds to using this table.

As described above, the voice interaction system 1 according to the second example has a conversation using the learning model that is suitable for the degree of user's activeness in the conversation, whereby this voice interaction system is able to execute a response in accordance with the activeness of the user who has a conversation with this voice interaction system. Accordingly, the voice interaction system 1 according to the second example is capable of appropriately handling a situation so as to effectively prevent a response error from occurring. Further, a response error occurring means that the tempo or the rhythm of the current conversation is not suitable for the degree of the user's activeness. The voice interaction system 1 according to the second example is able to make the tempo or the rhythm of the conversation suitable for the degree of the user's activeness by selecting the learning model that corresponds to the degree of the user's activeness. Further, the degree of user's activeness in the conversation may vary depending on the topic or the like of the conversation. The voice interaction system 1 according to the second example is able to change the learning model in accordance with the change in the degree of activeness.

Further, in the second example, when the learning model is generated, the degree of the user's activeness is associated as the user state. In other words, a plurality of learning models are generated for each degree of activeness. When the learning models are generated, the operator inputs, for example, the degree of the user's activeness during the conversation, whereby the sample data and the degree of the user's activeness are associated with each other. Further, also when the learning models are generated, as shown in Fig. 10, the degree of the user's activeness during the conversation may be determined using the user speech percentage or the amount of user speech. In this case, the operator may set the period T as appropriate. For example, when the topic of the conversation has been changed, the degree of the user's activeness may be calculated.

Accordingly, the sample data is classified for each degree of the user's activeness, and a plurality of pieces of learning data are generated by machine learning using the sample data that has been classified. Accordingly, for example, the learning model that corresponds to the degree of activeness #1, the learning model that corresponds to the degree of activeness #2, the learning model that corresponds to the degree of activeness #3, and the learning model that corresponds to the degree of activeness #4 are generated.

As described above, the boundaries of the correct labels "A (silent)", "B (nod)", and "C (speak)" of the learning models are defined depending on the user state. When the user state is "activeness", as the learning model corresponds to the user state in which the degree of activeness is large, the probability that "speak" is selected may be reduced and the probability that "silent" is selected may be increased. That is, the learning model is generated in such a way that the probability that "A (silent)" is selected in the learning model #4 (degree #4) becomes higher than the probability that "A (silent)" is selected in the learning model #1 (degree #1). Accordingly, during a conversation with the user whose degree of activeness is large, the voice interaction system 1 may be adjusted to speak less frequently in order to prevent overlapping of speeches. Further, during a conversation with the user whose degree of activeness is small, the voice interaction system 1 may be adjusted to speak more frequently in order to prevent a long silence.

While the degree of user's activeness in the conversation is detected using the user speech percentage or the amount of user speech in the aforementioned examples, the method of detecting the degree of the user's activeness is not limited to this method. The user state detection unit 140 may detect the degree of activeness by acquiring, for example, an image of the user. To be more specific, the user state detection unit 140 may determine the user's activeness by analyzing the user's expression and the line of sight indicated in a face image of the user, and digitize the degree of activeness. Further, the user state detection unit 140 may detect the degree of activeness by acquiring, for example, user speech. To be more specific, the user state detection unit 140 may analyze the prosody of the user speech, determine the user's activeness, and digitize the degree of activeness. As described above, however, by determining the degree of activeness using the user speech percentage or the amount of user speech, it is possible to determine the degree of the user's activeness more accurately. Accordingly, by using the user speech percentage or the amount of user speech, the voice interaction system 1 according to the second example is able to handle a situation more appropriately in order to prevent a response error from occurring.

### (Third example of user state not set out in the appended claims)

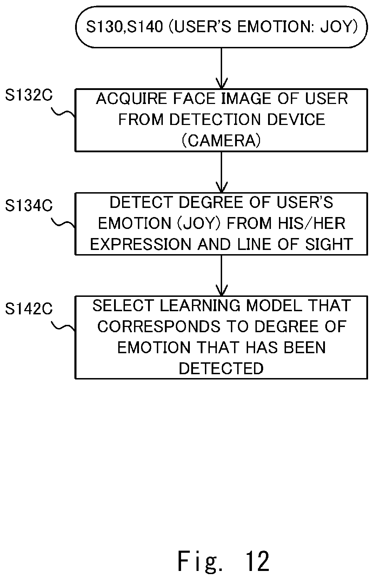

Fig. 12 is a diagram showing processing in a case in which the user state is the user's emotion. Fig. 12 shows specific processing of S130 and S140 (Fig. 7) in a case in which the user state is the degree of the user's emotion. The "degree of emotion" is, for example, the degree of "joy". The "degree of emotion" may instead be, for example, the degree of anger, the degree of sorrow, or the degree of surprise.

The user state detection unit 140 acquires the face image of the user from the detection device 6, which is a camera (Step S132C). The user state detection unit 140 analyzes the face image and detects the degree of the user's emotion (joy) from his/her expression, the line of sight and the like (Step S134C). For example, the user state detection unit 140 may digitize the user's emotion (joy) using artificial intelligence such as "Affdex" or "Emotion API". Then the user state detection unit 140 may detect the degree of emotion using a table in which the numerical value indicating the emotion and the degree of emotion are associated with each other as illustrated in Fig. 11.

Next, the learning model selection unit 150 selects the learning model that corresponds to the degree of the emotion (joy) that has been detected (Step S142C). It is assumed that a plurality of learning models are stored in the learning model database 160 in advance for each degree of the user's emotion. When, for example, "the degree of emotion (joy) #1" has been detected by the user state detection unit 140, the learning model selection unit 150 selects the learning model that corresponds to the "the degree of emotion (joy) #1". Further, when the "the degree of emotion (joy) #4" has been detected by the user state detection unit 140, the learning model selection unit 150 selects the learning model that corresponds to the "the degree of emotion (joy) #4".

As described above, the voice interaction system 1 according to the third example has a conversation using the learning model that is suitable for the degree of user's emotion in the conversation, whereby this voice interaction system 1 is able to make a response in accordance with the emotion of the user who has a conversation with this voice interaction system 1. Accordingly, the voice interaction system 1 according to the third example is capable of appropriately handling a situation so as to effectively prevent a response error from occurring. Further, a response error occurring means that the tempo or the rhythm of the current conversation is not suitable for the degree of the user's emotion. The voice interaction system 1 according to the third example is able to make the tempo or the rhythm of the conversation suitable for the degree of the user's emotion by selecting the learning model that corresponds to the degree of the user's emotion. Further, the degree of user's emotion in the conversation may vary depending on the topic or the like of the conversation. The voice interaction system 1 according to the third example is able to change the learning model depending on the change in the degree of emotion.

Further, in the third example, when the learning model is generated, the degree of the user's emotion is associated as the user state. In other words, a plurality of learning models are, for example, generated for each degree of emotion. When the learning model is generated, the operator inputs the degree of the user's emotion during the conversation, whereby the sample data and the degree of the user's emotion are associated with each other. Further, also when the learning model is generated, the degree of the user's emotion during the conversation may be determined using the face image of the user.

Accordingly, the sample data is classified for each degree of the user's emotion and a plurality of pieces of learning data are generated by machine learning using the sample data that has been classified. Accordingly, for example, the learning model that corresponds to the degree of emotion #1, the learning model that corresponds to the degree of emotion #2, the learning model that corresponds to the degree of emotion #3, and the learning model that corresponds to the degree of emotion #4 are generated.

While the degree of the user's emotion is detected using the face image of the user in the aforementioned examples, the method of detecting the degree of the user's emotion is not limited to this method. The user state detection unit 140 may detect the degree of emotion by, for example, acquiring the user speech. To be more specific, the user state detection unit 140 may determine the user's emotion by analyzing the prosody of the user speech and digitize the degree of emotion.

Further, in the aforementioned examples, the user state detection unit 140 detects the degree of emotion. The user state detection unit 140 may detect, however, the type of the emotion, that is, joy, sorrow, anger, surprise and the like. To be more specific, the user state detection unit 140 detects the numerical values indicating joy, sorrow, anger, and surprise, respectively. Then the user state detection unit 140 may detect the emotion (e.g., "anger") that corresponds to the largest value among these numerical values as the user's emotion. In this case, a plurality of learning models are provided for each type of emotion. Then the learning model selection unit 150 may select the learning model in accordance with the type of the emotion that has been detected (e.g., "anger").

Further, the user state detection unit 140 may detect the degree for each type of emotion. In this case, the learning model database 160 may store, for example, a learning model in a case in which the degree of anger is X1 and the degree of surprise is Y1, a learning model in a case in which the degree of anger is X1 and the degree of surprise is Y2, a learning model in a case in which the degree of anger is X2 and the degree of surprise is Y1, and a learning model in a case in which the degree of anger is X2 and the degree of surprise is Y2. Then the learning model selection unit 150 may select the learning model that corresponds to the degree of anger and the degree of surprise that have been detected.

### (Fourth Example of User State not set out in the appended claims)

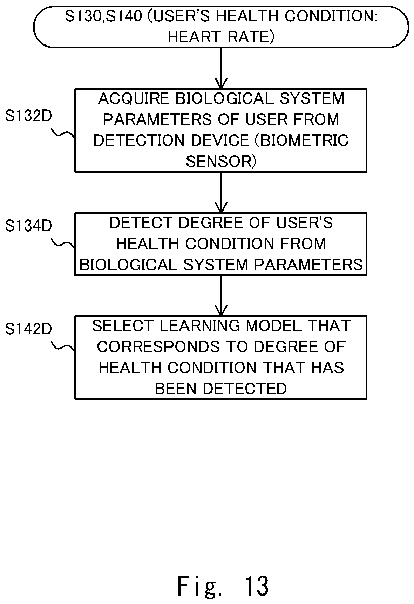

Fig. 13 is a diagram showing processing in a case in which the user state is the user's health condition. Fig. 13 shows specific processing of S130 and S140 (Fig. 7) in a case in which the user state is the degree of the user's health condition. "The degree of the health condition" is, for example, the degree of heart rate. "The degree of the health condition" may instead be the degree of blood pressure, the degree of body temperature or the like.

The user state detection unit 140 acquires biological system parameters of the user from the detection device 6, which is a biometric sensor (Step S132D). The biological system parameters are, for example, heart rate. The user state detection unit 140 detects the degree of the user's health condition from the biological system parameters (Step S134D). The user state detection unit 140 may detect the degree of the health condition by using, for example, a table in which the numerical value (heart rate) indicating the health condition and the degree of the health condition are associated with each other, as illustrated in Fig. 11.

Next, the learning model selection unit 150 selects the learning model that corresponds to the degree of the health condition (heart rate) that has been detected (Step S142D). It is assumed that the plurality of learning models are stored in the learning model database 160 in advance for each degree of the user's health condition. When, for example, "the degree of the health condition (heart rate) #1" has been detected by the user state detection unit 140, the learning model selection unit 150 selects the learning model that corresponds to "the degree of the health condition (heart rate) #1". Further, when "the degree of the health condition (heart rate) #4" has been detected by the user state detection unit 140, the learning model selection unit 150 selects the learning model that corresponds to "the degree of the health condition (heart rate) #4".

As described above, the voice interaction system 1 according to the fourth example has a conversation with the user using a learning model that is suitable for the degree of the user's health condition, whereby this voice interaction system 1 is able to execute a response in accordance with the health condition of the user who has a conversation. Accordingly, the voice interaction system 1 according to the fourth example is capable of appropriately handling a situation so as to effectively prevent a response error from occurring. Further, a response error occurring means that the tempo or the rhythm of the current conversation is not suitable for the degree of the user's health condition. The voice interaction system 1 according to the fourth example selects the learning model that corresponds to the degree of the user's health condition, whereby it becomes possible to make the tempo or the rhythm of the conversation suitable for the degree of the user's health condition. Further, the degree of heart rate or the like of the user may vary depending on the topic or the like of the conversation. The voice interaction system 1 according to the fourth example is able to change the learning model depending on the change in the degree of the health condition such as heart rate.

Further, in the fourth example, when the learning model is generated, the degree of the user's health condition is associated as the user state. In other words, a plurality of learning models are generated for each degree of the health condition. When the learning model is generated, the degree of the user's health condition during the conversation is input using, for example, a biometric sensor, whereby the sample data and the degree of the user's health condition are associated with each other.

Accordingly, the sample data is classified for each degree of the user's health condition, and a plurality of pieces of learning data are generated by machine learning using the sample data that has been classified. Accordingly, for example, the learning model that corresponds to the degree of the health condition #1, the learning model that corresponds to the degree of the health condition #2, the learning model that corresponds to the degree of the health condition #3, and the learning model that corresponds to the degree of the health condition #4 are generated.

While the degree of the user's health condition is detected using the biometric sensor in the aforementioned examples, the method of detecting the degree of the user's health condition is not limited to this method. The user state detection unit 140 may detect the degree of the user's health condition by acquiring, for example, the face image of the user from the detection device 6, which is a camera. In this case, the user state detection unit 140 may detect the face color (red, blue, white, yellow, or black) of the user by analyzing the face image. Then the user state detection unit 140 may detect the health condition depending on which color of red, blue, white, yellow, and black the color of the face of the user is close to. In this case, a plurality of learning models are stored for each color of the face of the user.

Further, the user state detection unit 140 may determine whether the user's health condition is good or poor, or the degree of fatigue of the user from the plurality of biological system parameters (heart rate, blood pressure, and body temperature). Further, the user state detection unit 140 may determine whether each of the heart rate, the blood pressure, and the body temperature is within a predetermined normal range, and determine the degree of the health condition (whether the health condition is good or poor) depending on the number of biological system parameters that have fallen outside the normal range.

### (Fifth example of user state not set out in the appended claims)

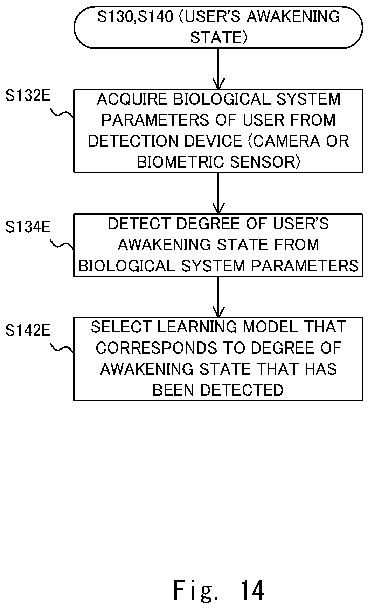

Fig. 14 is a diagram showing processing in a case in which the user state is the degree of the user's awakening state. Fig. 14 shows specific processing of S130 and S140 (Fig. 7) in a case in which the user state is the degree of the user's awakening state.

The user state detection unit 140 acquires the biological system parameters of the user from the detection device 6, which is a camera or a biometric sensor (Step S132E). The biological system parameters are, for example, at least one of eyeblink, heartbeat, and brain waves. The eyeblink may be acquired by analyzing the face image of the user acquired from a camera. The heartbeat and the brain waves may be acquired by respectively using a heart rate meter and an electroencephalograph, which are biometric sensors.

The user state detection unit 140 detects the degree of the user's awakening state from the biological system parameters (Step S134E). The user state detection unit 140 calculates, for example, the awakening degree from the aforementioned biological system parameters. The user state detection unit 140 may calculate, for example, the awakening degree from the intervals between eyeblinks, the time during which the user opens his/her eyes during eyeblink, the opening degree of the eyes or the like. Then the user state detection unit 140 may detect the degree of the awakening state using a table in which the awakening degree and the degree of the awakening state are associated with each other as illustrated in Fig. 11.

Next, the learning model selection unit 150 selects the learning model that corresponds to the degree of the awakening state that has been detected (Step S142E). It is assumed that a plurality of learning models are stored in advance in the learning model database 160 for each degree of the user's awakening state. When, for example, "the degree of the awakening state #1" has been detected by the user state detection unit 140, the learning model selection unit 150 selects the learning model that corresponds to "the degree of the awakening state #1".
Further, when "the degree of the awakening state #4" has been detected by the user state detection unit 140, the learning model selection unit 150 selects the learning model that corresponds to "the degree of the awakening state #4".

As described above, the voice interaction system 1 according to the fifth example has a conversation using the learning model adapted for the degree of the user's awakening state, whereby the above voice interaction system 1 is able to make a response in accordance with the awakening state of the user who has a conversation. Accordingly, the voice interaction system 1 according to the fifth example is capable of appropriately handling a situation so as to effectively prevent a response error from occurring. Further, a response error occurring means that the tempo or the rhythm of the current conversation is not suitable for the degree of the user's awakening state. The voice interaction system 1 according to the fifth example is able to make the tempo or the rhythm of the conversation suitable for the degree of the user's awakening state by selecting the learning model that corresponds to the degree of the user's awakening state. Further, the awakening degree of the user may vary depending on the topic or the like of the conversation. The voice interaction system 1 according to the fifth example is able to change the learning model in accordance with the change in the awakening degree.

Further, in the fifth example, when the learning model is generated, the degree of the user's awakening state is associated as the user state. In other words, a plurality of learning models are generated for each degree of the awakening state. When the learning model is generated, the degree of the user's awakening state during a conversation is input using, for example, a camera or a biometric sensor, whereby the sample data and the degree of the user's awakening state are associated with each other.

Accordingly, the sample data is classified for each degree of the user's awakening state, and a plurality of pieces of learning data are generated by machine learning using the sample data that has been classified. Accordingly, for example, the learning model that corresponds to the degree of the awakening state #1, the learning model that corresponds to the degree of the awakening state #2, the learning model that corresponds to the degree of the awakening state #3, and the learning model that corresponds to the degree of the awakening state #4 are generated.

While the degree of the user's awakening state is detected using a camera or a biometric sensor in the aforementioned examples, the method of detecting the degree of the user's awakening state is not limited to this method. The user state detection unit 140 may detect the degree of the awakening state by acquiring the user speech. To be more specific, the user state detection unit 140 may analyze the prosody of the user speech, determine the user's awakening state, and digitize the degree of the awakening state.

### (Second Embodiment not set out in the appended claims)

Next, a second embodiment will be explained. The second embodiment is different from the first embodiment in that the voice interaction system 1 generates a plurality of learning models. Since the hardware configuration of the voice interaction system 1 according to the second embodiment is substantially similar to the hardware configuration of the voice interaction system 1 according to the first embodiment shown in Fig. 1, the descriptions thereof will be omitted.

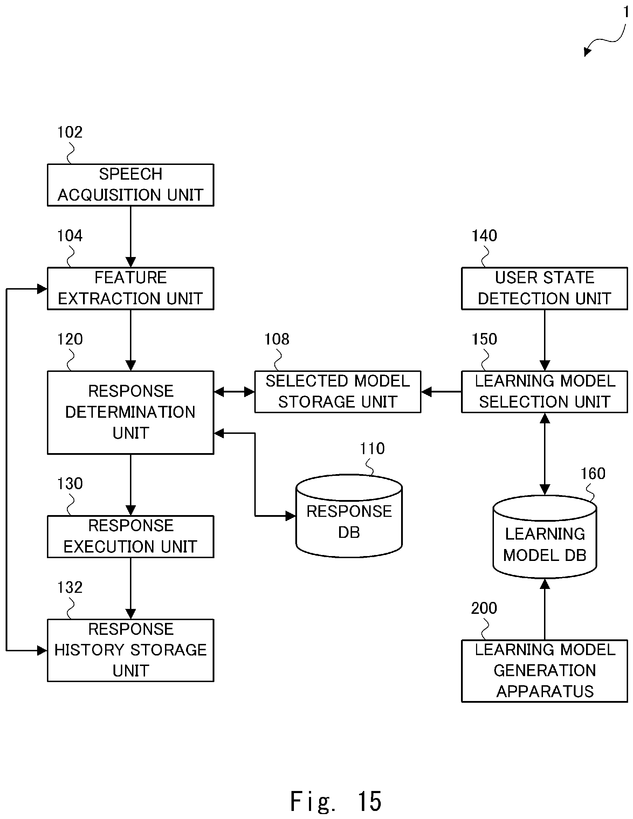

Fig. 15 is a block diagram showing a configuration of the voice interaction system 1 according to the second embodiment. The voice interaction system 1 according to the second embodiment includes a speech acquisition unit 102, a feature extraction unit 104, a selected model storage unit 108, a response database 110, a response determination unit 120, a response execution unit 130, and a response history storage unit 132. Further, the voice interaction system 1 according to the second embodiment includes a user state detection unit 140, a learning model selection unit 150, and a learning model database 160. The voice interaction system 1 further includes a learning model generation apparatus 200. Since the components other than the learning model generation apparatus 200 has functions substantially similar to those described in the first embodiment, the descriptions thereof will be omitted.

The learning model generation apparatus 200 generates a plurality of learning models by a method described later. The plurality of learning models generated by the learning model generation apparatus 200 are stored in the learning model database 160. The learning models may either be automatically stored by the learning model generation apparatus 200 or be manually stored by a worker such as an operator.

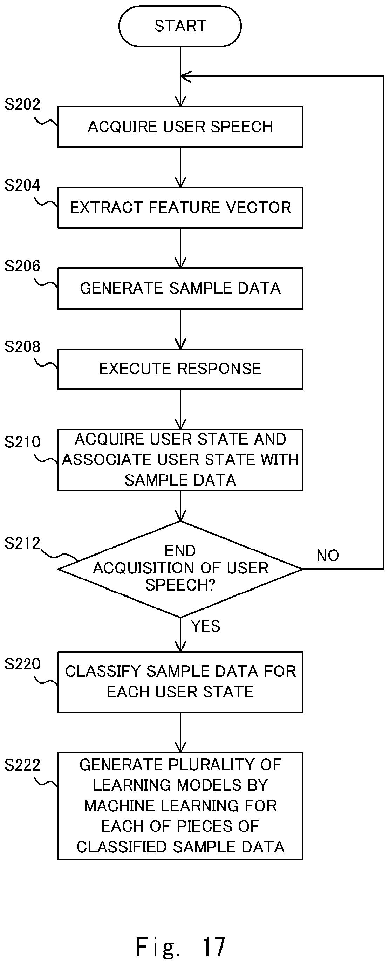

The learning model generation apparatus 200 is not necessarily be physically integrated with the other components. That is, an apparatus (such as a robot) in which the other components are provided and an apparatus (such as a computer) in which the learning model generation apparatus 200 is provided may not be the same. A specific configuration of the learning model generation apparatus 200 will be explained below. The processing of the learning model generation apparatus 200 (processing shown in Fig. 17 that will be explained later) corresponds to Figs. 4-6 and is performed at a stage previous to a conversation with the user (processing shown in Fig. 7).

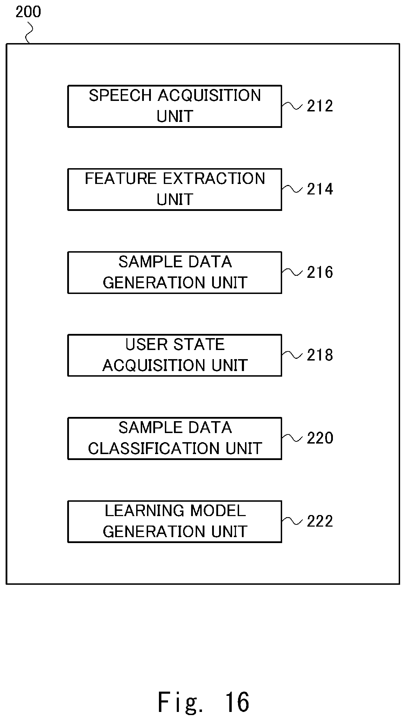

Fig. 16 is a diagram showing a configuration of the learning model generation apparatus 200 according to the second embodiment. Further, Fig. 17 is a flowchart showing a learning model generation method executed by the learning model generation apparatus 200 according to the second embodiment. The learning model generation apparatus 200 includes a speech acquisition unit 212, a feature extraction unit 214, a sample data generation unit 216, a user state acquisition unit 218, a sample data classification unit 220, and a learning model generation unit 222. The learning model generation apparatus 200 may have a hardware configuration that is substantially similar to that of the voice interaction system 1 shown in Fig. 1 independently.

The speech acquisition unit 212 acquires user speech, which is speech given by one or more desired user, by having a conversation with the desired user, in a way similar to that of the processing of S102 in Fig. 7 (Step S202). The "desired user" is not limited to a user who has a conversation with the voice interaction system 1 and may be a desired user. The feature extraction unit 214 extracts a feature vector indicating at least features of the acquired user speech in a way similar to that of the processing of S104 in Fig. 7 (Step S204).

Next, the sample data generation unit 216 generates sample data in which a correct label indicating a response to the user speech and a feature vector are associate with each other (Step S206). To be more specific, as described above with reference to Fig. 4, the sample data generation unit 216 associates the response (correct label) determined by the operator with the feature vector of the corresponding user speech. Accordingly, the sample data generation unit 216 generates the sample data. As long as the correct label can be automatically determined, the sample data generation unit 216 may automatically determine the correct label (response) from the user speech and associate the correct label that has been determined with the feature vector of the user speech. Next, the learning model generation apparatus 200 (or the response execution unit 130 shown in Fig. 2) executes a response in a way similar to that of the processing of S120 in Fig. 7 (Step S208).

The user state acquisition unit 218 acquires the user state, which is a desired user's state when the user has made a speech, and associates the acquired user state with the sample data that corresponds to the user speech (Step S210). To be more specific, the user state acquisition unit 218 may acquire the user state of the desired user using the image of the user, the user speech, the biological system parameters or the like, as described with reference to Figs. 9-14. The method of acquiring the user state may differ from each other depending on the type of the user state (the first to fifth examples). Alternatively, the user state acquisition unit 218 may acquire, for example, the user state of the desired user determined by the operator. Then the user state acquisition unit 218 associates the acquired user state with the sample data that corresponds to the speech made by the desired user.

The learning model generation apparatus 200 determines whether to end acquisition of the user speech (Step S212). When the acquisition of the user speech should be continued (NO in S212), the learning model generation apparatus 200 repeats the processing of S202-S210. On the other hand, when the acquisition of the user speech is ended as a sufficient amount of sample data has been acquired (YES in S212), the sample data classification unit 220 classifies the sample data for each user state, as described with reference to Fig. 6 (Step S220). Then the learning model generation unit 222 generates a plurality of learning models by, for example, machine learning such as random forest or Support Vector Machine for each of the pieces of classified sample data, as described above with reference to Fig. 6 (Step S222).

As described above, the learning model generation apparatus 200 according to the second embodiment classifies the sample data for each user state and generates a plurality of learning models by machine learning, whereby this learning model generation apparatus is able to generate a plurality of learning models that correspond to the user state. Accordingly, the voice interaction system 1 is able to select the learning model in accordance with the user state, as described above.

### (Modified Example)

The present disclosure is not limited to the aforementioned embodiments and may be changed as appropriate without departing from the scope of the present disclosure. For example, in the aforementioned flowcharts, the order of the plurality of processing may be changed as appropriate. Further, in the aforementioned flowcharts, one of the plurality of processing may be omitted. For example, the processing of S130 in Fig. 7 may be performed between S102 and S120.

Further, the first to fifth examples of the user state described with reference to Figs. 9-14 may be mutually applicable. That is, the user state detection unit 140 may detect a plurality of types of user state. Then the learning model selection unit 150 selects the learning model that corresponds to the plurality of types of user state that have been detected. The user state detection unit 140 may detect, for example, the identification information on the user and the degree of the user's activeness. In this case, the learning model database 160 may store, for example, a plurality of learning models for each degree of activeness of the user A and each degree of activeness of the user B. When the user state detection unit 140 has detected "the degree of activeness #1" of the "user A", the learning model selection unit 150 may select the learning model that corresponds to "the degree of activeness #1" of the "user A".

While the feature vector (Fig. 3) is generated from the prosodic information or the like of the user speech in the aforementioned embodiments, this configuration is merely an example. The components of the feature vector are not limited to the ones related to the prosody, and may include features of the user acquired from the detection device 6, which is a camera. The components of the feature vector may include, for example, the line of sight of the user and the distance between the interaction robot and the user.

Further, while the example in which the voice interaction system 1 is installed in a robot is illustrated in the aforementioned embodiments, this configuration is merely an example. The voice interaction system 1 may be installed in an information terminal such as a smartphone or a tablet terminal. In this case, when the "nod response" is performed, a video image in which a person, an animal, a robot or the like nods may be, for example, displayed on the display screen of the information terminal instead of operating the manipulator 8.

In the above examples, the program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM, CD-R, CD-R/W, and semiconductor memories (such as mask ROM, PROM (Programmable ROM), EPROM (Erasable PROM), flash ROM, RAM, etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the disclosure thus described, it will be obvious that the embodiments of the disclosure may be varied in many ways. Such variations are not to be regarded as a departure from the scope of the disclosure, and all such modifications as would be obvious to one skilled in the art are intended for inclusion within the scope of the following claims.

## Claims

1. A voice interaction system (1) that is configured to have a conversation with a user by using a voice, comprising:
a speech acquisition unit (102) configured to acquire user speech given by the user;
a feature extraction unit (104) configured to extract at least a feature of the acquired user speech;
a response determination unit (120) configured to determine a response in accordance with the extracted feature using any one of a plurality of learning models generated in advance by machine learning, wherein the response is one of: silent, nod and speak;
a response execution unit (130) configured to perform control in order to execute the determined response;
a user state detection unit (140) configured to detect a user state, which is a state of the user, wherein the user state is a degree of activeness of the user in the conversation; and
a learning model selection unit (150) configured to select the learning model from the plurality of learning models in accordance with the detected user state, wherein
the response determination unit (120) is configured to determine the response using the learning model selected by the learning model selection unit (150),
the user state detection unit (140) is configured to detect the degree of activeness of the user in the conversation as the user state, wherein the degree of activeness is determined by detecting the percentage of the time during which the user has made a speech with respect to the sum of the time during which the voice interaction system has output a voice as a response and the time during which the user has made a speech in a predetermined period, and
the learning model selection unit (150) is configured to select the learning model that corresponds to the detected degree of activeness that corresponds to the percentage of the time during which the user has made a speech.

2. A voice interaction method performed by a voice interaction system (1) that is configured to have a conversation with a user by using a voice, the voice interaction method comprising:
acquiring user speech given by the user;
extracting at least a feature of the acquired user speech;
determining a response in accordance with the extracted feature using any one of a plurality of learning models generated in advance by machine learning, wherein the response is one of: silent, nod and speak;
performing control in order to execute the determined response;
detecting a user state, which is a state of the user, wherein the user state is a degree of activeness of the user in the conversation; and
selecting the learning model from the plurality of learning models in accordance with the detected user state,
wherein the response is determined using the selected learning model,
the user state detection unit (140) detects the degree of activeness of the user in the conversation as the user state, wherein the degree of activeness is determined by detecting the percentage of the time during which the user has made a speech with respect to the sum of the time during which the voice interaction system has output a voice as a response and the time during which the user has made a speech in a predetermined period, and
the learning model selection unit (150) selects the learning model that corresponds to the detected degree of activeness that corresponds to the percentage of the time during which the user has made a speech.

3. A program for executing a voice interaction method performed by a voice interaction system (1) that is configured to have a conversation with a user by using a voice, the program causing a computer to execute the steps of:
acquiring user speech given by the user;
extracting at least a feature of the acquired user speech;
determining a response in accordance with the extracted feature using any one of a plurality of learning models generated in advance by machine learning, wherein the response is one of: silent, nod and speak;
performing control in order to execute the determined response;
detecting a user state, which is a state of the user, wherein the user state is a degree of activeness of the user in the conversation;
selecting the learning model from the plurality of learning models in accordance with the detected user state; and
determining the response using the selected learning model,
the user state detection unit (140) detects the degree of activeness of the user in the conversation as the user state, wherein the degree of activeness is determined by detecting the percentage of the time during which the user has made a speech with respect to the sum of the time during which the voice interaction system has output a voice as a response and the time during which the user has made a speech in a predetermined period, and
the learning model selection unit (150) selects the learning model that corresponds to the detected degree of activeness that corresponds to the percentage of the time during which the user has made a speech.

## Patentansprüche

1. Sprachinteraktionssystem (1), das zum Führen eines Gesprächs mit einem Benutzer durch Verwenden einer Stimme konfiguriert ist und umfasst:
eine Spracherfassungseinheit (102), die zum Erfassen von Benutzersprache konfiguriert ist, die vom Benutzer geäußert wird;
eine Merkmalsextraktionseinheit (104), die zum Extrahieren mindestens eines Merkmals der erfassten Benutzersprache konfiguriert ist;
eine Antwortbestimmungseinheit (120), die so konfiguriert ist, dass sie eine Antwort gemäß dem extrahierten Merkmal unter Verwendung eines von einer Mehrzahl von Lernmodellen bestimmt, die im Voraus durch maschinelles Lernen erzeugt wurde, wobei die Antwort eines von Folgenden ist: Schweigen, Nicken und Sprechen;
eine Antwortausführungseinheit (130), die so konfiguriert ist, dass sie Steuerung zum Ausführen der bestimmten Antwort durchführt;
eine Benutzerzustandsdetektionseinheit (140), die zum Detektieren eines Benutzerzustands konfiguriert ist, der ein Zustand des Benutzers ist, wobei der Benutzerzustand ein Grad von Aktivität des Benutzer im Gespräch ist; und
eine Lernmodellauswahleinheit (150), die zum Auswählen des Lernmodells aus der Mehrzahl von Lernmodellen gemäß dem detektierten Benutzerzustand konfiguriert ist, wobei
die Antwortbestimmungseinheit (120) zum Bestimmen der Antwort unter Verwendung des durch die Lernmodellauswahleinheit (150) ausgewählten Lernmodells konfiguriert ist;
die Benutzerzustandseinheit (140) zum Detektieren des Grades von Aktivität des Benutzers im Gespräch als den Benutzerzustand konfiguriert ist, wobei der Aktivitätsgrad durch Detektieren des Prozentsatzes der Zeit bestimmt wird, während der der Benutzer Sprache geäußert hat, in Bezug auf die Summe der Zeit, während der das Sprachinteraktionssystem eine Stimme als Antwort ausgegeben hat, und der Zeit, während der der Benutzer Sprache in einem vorbestimmten Zeitraum geäußert hat,
die Lernmodellauswahleinheit (150) so konfiguriert ist, dass sie das Lernmodell auswählt, das dem detektierten Aktivitätsgrad entspricht, der dem Prozentsatz der Zeit entspricht, während der der Benutzer Sprache geäußert hat.

2. Sprachinteraktionsverfahren, das von einem Sprachinteraktionssystem (1) durchgeführt wird, das zum Führen eines Gesprächs mit einem Benutzer durch Verwenden einer Stimme konfiguriert ist, wobei das Sprachinteraktionsverfahren umfasst:
Erfassen von Benutzersprache, die vom Benutzer geäußert wird;
Extrahieren mindestens eines Merkmals der erfassten Benutzersprache;
Bestimmen einer Antwort gemäß dem extrahierten Merkmal unter Verwendung eines von einer Mehrzahl von Lernmodellen, die im Voraus durch maschinelles Lernen erzeugt wurde, wobei die Antwort eines von Folgenden ist: Schweigen, Nicken und Sprechen;
Durchführen von Steuerung zum Ausführen der bestimmten Antwort;
Detektieren eines Benutzerzustands, der ein Zustand des Benutzers ist, wobei der Benutzerzustand ein Grad von Aktivität des Benutzer im Gespräch ist; und
Auswählen des Lernmodells aus der Mehrzahl von Lernmodellen gemäß dem detektierten Benutzerzustand,
wobei die Antwort unter Verwendung des ausgewählten Lernmodells bestimmt wird,
die Benutzerzustandseinheit (140) den Grad von Aktivität des Benutzers im Gespräch als den Benutzerzustand detektiert, wobei der Aktivitätsgrad durch Detektieren des Prozentsatzes der Zeit bestimmt wird, während der der Benutzer Sprache geäußert hat, in Bezug auf die Summe der Zeit, während der das Sprachinteraktionssystem eine Stimme als Antwort ausgegeben hat, und der Zeit, während der der Benutzer Sprache in einem vorbestimmten Zeitraum geäußert hat, und
die Lernmodellauswahleinheit (150) das Lernmodell auswählt, das dem detektierten Aktivitätsgrad entspricht, der dem Prozentsatz der Zeit entspricht, während der der Benutzer Sprache geäußert hat.

3. Programm zum Ausführen eines Sprachinteraktionsverfahrens, das von einem Sprachinteraktionssystem (1) durchgeführt wird, das zum Führen eines Gesprächs mit einem Benutzer durch Verwenden einer Stimme konfiguriert ist, wobei das Programm einen Computer zum Ausführen der folgenden Schritte veranlasst:
Erfassen von Benutzersprache, die vom Benutzer geäußert wird;
Extrahieren mindestens eines Merkmals der erfassten Benutzersprache;
Bestimmen einer Antwort gemäß dem extrahierten Merkmal unter Verwendung eines von einer Mehrzahl von Lernmodellen, die im Voraus durch maschinelles Lernen erzeugt wurde, wobei die Antwort eines von Folgenden ist: Schweigen, Nicken und Sprechen;
Durchführen von Steuerung zum Ausführen der bestimmten Antwort;
Detektieren eines Benutzerzustands, der ein Zustand des Benutzers ist, wobei der Benutzerzustand ein Grad von Aktivität des Benutzer im Gespräch ist;
Auswählen des Lernmodells aus der Mehrzahl von Lernmodellen gemäß dem detektierten Benutzerzustand; und
Bestimmen der Antwort unter Verwendung des ausgewählten Lernmodells,
wobei die Benutzerzustandseinheit (140) den Grad von Aktivität des Benutzers im Gespräch als den Benutzerzustand detektiert, wobei der Aktivitätsgrad durch Detektieren des Prozentsatzes der Zeit bestimmt wird, während der der Benutzer Sprache geäußert hat, in Bezug auf die Summe der Zeit, während der das Sprachinteraktionssystem eine Stimme als Antwort ausgegeben hat, und der Zeit, während der der Benutzer Sprache in einem vorbestimmten Zeitraum geäußert hat, und
die Lernmodellauswahleinheit (150) das Lernmodell auswählt, das dem detektierten Aktivitätsgrad entspricht, der dem Prozentsatz der Zeit entspricht, während der der Benutzer Sprache geäußert hat.

## Revendications

1. Système d'interaction vocale (1) qui est configuré de façon à avoir une conversation avec un utilisateur en utilisant une voix, comprenant :
une unité d'acquisition de parole (102) configurée de façon à acquérir une parole d'utilisateur émise par l'utilisateur ;
une unité d'extraction de caractéristique (104) configurée de façon à extraire au moins une caractéristique de la parole d'utilisateur acquise ;
une unité de détermination de réponse (120) configurée de façon à déterminer une réponse conformément à la caractéristique extraite en utilisant un quelconque d'une pluralité de modèles d'apprentissage générés en avance par un apprentissage automatique, la réponse étant soit un silence, soit un signe de tête, soit une parole :
une unité d'exécution de réponse (130) configurée de façon à exécuter une commande afin d'exécuter la réponse déterminée ;
une unité de détection d'état d'utilisateur (140) configurée de façon à détecter un état d'utilisateur, qui est un état de l'utilisateur, cet état d'utilisateur étant un degré d'activité de l'utilisateur dans la conversation ; et
une unité de sélection de modèle d'apprentissage (150) configurée de façon à sélectionner le modèle d'apprentissage parmi la pluralité de modèles d'apprentissage conformément à l'état d'utilisateur détecté,
l'unité de détermination de réponse (120) étant configurée de façon à déterminer la réponse en utilisant le modèle d'apprentissage sélectionné par l'unité de sélection de modèle d'apprentissage (150),
l'unité de sélection d'état d'utilisateur (140) étant configurée de façon à détecter le degré d'activité de l'utilisateur dans la conversation comme l'état d'utilisateur, le degré d'activité étant déterminé en détectant le pourcentage du temps pendant lequel l'utilisateur a émis une parole par rapport au total du temps pendant lequel le système d'interaction vocale a émis une voix comme une réponse et du temps pendant lequel l'utilisateur a émis une parole dans une période prédéterminée, et
l'unité de sélection de modèle d'apprentissage (150) étant configuré de façon à sélectionner le modèle d'apprentissage qui correspond au degré d'activité qui correspond au pourcentage de temps pendant lequel l'utilisateur a émis une parole.

2. Procédé d'interaction vocale exécuté par un système d'interaction vocale (1) qui est configuré de façon à avoir une conversation avec un utilisateur en utilisant une voix, ce procédé d'interaction vocal comprenant :
l'acquisition d'une parole d'utilisateur émise par l'utilisateur ;
l'extraction d'au moins une caractéristique de la parole d'utilisateur acquise ;
la détermination d'une réponse (120) conformément à la caractéristique extraite en utilisant un quelconque d'une pluralité de modèles d'apprentissage générés en avance par un apprentissage automatique, la réponse étant soit un silence, soit un signe de tête, soit une parole ;
l'exécution d'une commande afin d'exécuter la réponse déterminée ;
la détection d'un état d'utilisateur, qui est un état de l'utilisateur, cet état d'utilisateur étant un degré d'activité de l'utilisateur dans la conversation ; et
la sélection du modèle d'apprentissage parmi la pluralité de modèles d'apprentissage conformément à l'état d'utilisateur détecté,
la réponse étant déterminée en utilisant le modèle d'apprentissage sélectionné,
l'unité de sélection d'état d'utilisateur (140) détectant le degré d'activité de l'utilisateur dans la conversation comme l'état d'utilisateur, le degré d'activité étant déterminé en détectant le pourcentage du temps pendant lequel a émis une parole par rapport au total du temps pendant lequel le système d'interaction vocale a émis une voix comme une réponse et du temps pendant lequel l'utilisateur a émis une parole dans une période prédéterminée, et
l'unité de sélection de modèle d'apprentissage (150) sélectionnant le modèle d'apprentissage qui correspond au degré d'activité détecté qui correspond au pourcentage de temps pendant lequel l'utilisateur a émis une parole.

3. Programme pour exécuter un procédé d'interaction vocale exécuté par un système d'interaction vocale (1) qui est configuré de façon à avoir une conversation avec un utilisateur en utilisant une voix, ce programme faisant exécuter à un ordinateur les étapes consistant à :
acquérir une parole d'utilisateur émise par l'utilisateur ;
extraire au moins une caractéristique de la parole d'utilisateur acquise ;
déterminer une réponse conformément à la caractéristique extraite en utilisant un quelconque d'une pluralité de modèles d'apprentissage générés en avance par un apprentissage automatique, la réponse étant soit un silence, soit un signe de tête, soit une parole ;
l'exécution d'une commande afin d'exécuter la réponse déterminée ;
la détection d'un état d'utilisateur, qui est un état de l'utilisateur, cet état d'utilisateur étant un degré d'activité de l'utilisateur dans la conversation ;
la sélection du modèle d'apprentissage parmi la pluralité de modèles d'apprentissage conformément à l'état d'utilisateur détecté ; et
la détermination de la réponse en utilisant le modèle d'apprentissage sélectionné,
l'unité de sélection d'état d'utilisateur (140) détectant le degré d'activité de l'utilisateur dans la conversation comme l'état d'utilisateur, le degré d'activité étant déterminé en détectant le pourcentage du temps pendant lequel l'utilisateur a émis une parole par rapport au total du temps pendant lequel le système d'interaction vocale a émis une voix comme une réponse et du temps pendant lequel l'utilisateur a émis une parole dans une période prédéterminée, et
l'unité de sélection de modèle d'apprentissage (150) sélectionnant le modèle d'apprentissage qui correspond au degré d'activité détecté qui correspond au pourcentage du temps pendant lequel l'utilisateur a émis une parole.
